# EUROPÄISCHE PATENTANMELDUNG

(11) **EP 2 770 191 A2**
(43) Veröffentlichungstag der Anmeldung: **27.08.2014**
(21) Anmeldenummer: 14155062.4
(22) Anmeldetag: 13.02.2014
(51) Int. Cl.: F02K 3/06, F01D 21/02

(54) **Fluggasturbine mit einer ersten drehbaren Welle**

(30) Priorität: 22.02.2013 DE 102013101791
(71) Anmelder: Rolls-Royce Deutschland Ltd & Co KG, 15827 Blankenfelde-Mahlow (DE)
(72) Erfinder: Burghardt, Sascha, 15370 Vogelsdorf (DE)
(74) Vertreter: Kronthaler, Wolfgang N.K.

(57) **Zusammenfassung**

Es wird eine Fluggasturbine (1) mit einer ersten drehbaren Welle (16) und einer koaxial dazu angeordneten zweiten Welle (17), die zumindest in einem Wellenende nahen Bereich mit der ersten Welle (16) drehfest verbunden ist, beschrieben. In zum Verbindungsbereich zwischen den Wellen (16 und 17) beabstandeten Bereichen der Wellen (16 und 17) sind Aussparungen (16A, 17A) vorgesehen, die bei Überschreiten einer definierten Verdrillung der ersten Welle (16) gegenüber der zweiten Welle (17) sich zumindest bereichsweise miteinander in Überdeckung befinden. Den Wellen (16, 17) ist wenigstens ein drehbar ausgeführtes Hebelelement (20, 21) zugeordnet, das im Bereich eines Endes (20A, 21 A) der Wellen (16, 17) in die Aussparungen (16A, 17A) der Wellen (16, 17) in radialer Richtung eingreift und dabei um einen Drehpunkt (18, 19) verschwenkt. Ein zweiter Hebelarm (20D, 21 D) der Hebelelemente (20, 21) ist bei in die Aussparungen (16A, 17A) eingreifendem erstem Hebelarm (20B, 21 B) mit einer elektrischen Sensoreinrichtung (24) in Wirkverbindung bringbar, in deren Bereich ein zur definierten Verdrillung der ersten Welle (16) äquivalentes Sensorsignal generierbar ist.

## Beschreibung

Die Erfindung betrifft eine Fluggasturbine mit einer ersten drehbaren Welle gemäß der im Oberbegriff des Patentanspruches 1 näher definierten Art.

Aus der DE 33 22 430 A1 ist ein Gasturbinentriebwerk bzw. eine Fluggasturbine mit einer ersten Welle, die koaxial innerhalb einer zweiten Welle angeordnet ist, bekannt. Eine der Wellen verbindet antriebsmäßig einen ersten rotierenden Aufbau mit einem zweiten rotierenden Aufbau. Die zweite Welle ist zumindest in einem Wellenende nahen Bereich mit der ersten Welle drehfest verbunden. In zum Verbindungsbereich zwischen den Wellen beabstandeten Bereichen der Wellen sind Aussparungen vorgesehen, die bei Überschreiten einer in Abhängigkeit des im Bereich der ersten Welle anliegenden Drehmomentes stehenden definierten Verdrillung der ersten Welle gegenüber der zweiten Welle sich zumindest bereichsweise miteinander in Überdeckung befinden.

Den Wellen ist im Bereich der Aussparungen wenigstens ein um einen wellenfesten Drehpunkt drehbar ausgeführtes Hebelelement zugeordnet, das im Bereich eines Endes eines Hebelarmes bei entsprechender Überdeckung der Aussparungen der Wellen in die Aussparungen der Wellen in radialer Richtung eingreift und dabei um den Drehpunkt schwenkt, wobei sich dabei ein radialer Abstand zwischen einem Ende eines zweiten Hebelarmes des Hebelelementes und den Wellen vergrößert. Dies führt dazu, dass ein Ende des zweiten Hebelarmes des Hebelelementes mit einem Ende eines weiteren Hebels in Wirkverbindung bringbar ist und diesen ebenfalls verschwenkt. Die Verschwenkung des Endes des weiteren Hebels bewirkt, dass der Hebel mit seinem Arm um eine Achse gedreht wird. Die Drehbewegung des weiteren Hebels bewirkt wiederum eine Abschaltung der Brennstoffzufuhr der Fluggasturbine, womit die Brennstoffzufuhr in Richtung der Brennkammer der Fluggasturbine beendet wird. Mittels dieser Maßnahme soll ein Hochlaufen der Drehzahl der Niederdruckturbine der Fluggasturbine in Richtung eines unter Umständen Schädigungen im Bereich eines Gasturbinentriebwerkes verursachenden Überdrehzahlbereiches verhindert werden.

Nachteilhafterweise umfasst das vorbeschriebene Sicherheitssystem eines Gasturbinentriebwerkes eine unerwünscht große Anzahl mechanischer Teile, die das Risiko des Auftretens von Fehlerfällen erhöht. Zusätzlich ist das bekannte Sicherheitssystem zum Abschalten eines Triebwerkes während spezieller Fehlerfälle, z. B. beim Auftreten von Überdrehzahlzuständen rotierender Bauteile, auch durch ein hohes Eigengewicht sowie einen großen Bauraumbedarf gekennzeichnet, was jedoch den Auslegungskriterien von Fluggeräten widerspricht.

Aufgrund der rein mechanischen Ausführung des Sicherheitssystems einer Fluggasturbine ist die Anforderung an moderne Engine-Monitoring-Systeme in Form elektronisch überprüfbarer bzw. monitorbarer Komponenten über einen sogenannten Systemcheck nicht umsetzbar. Solche Überprüfungen sollen möglichst während jeder Inbetriebnahme und auch während des Betriebs des Systems durchführbar sein. Rein mechanische Lösungen sind dafür nicht geeignet. Ausschließlich elektronisch ausgeführte Sicherheitssysteme ermöglichen zwar eine elektronische Überprüfung der Funktionalität, weisen jedoch oftmals unerwünscht lange Auslösezeiten auf, womit Maßnahmen zur Vermeidung schwerwiegenderer Beschädigungen von Triebwerken unter Umständen erst zu spät eingeleitet werden können.

Eine elektronisch überprüfbare und mechanische Komponenten aufweisende Einrichtung zur Notabschaltung einer Gasturbine offenbart die DE 197 27 296 A1, die eine Schaltvorrichtung umfasst, über die ein Stellglied zum Schließen der Brennstoffleitung aktiviert wird, wenn in Folge einer Überdrehzahl der Turbine eine unzulängliche Axialverschiebung der Turbinenwelle auftritt.

Bei dieser Lösung ist jedoch problematisch, dass der Fehlerfall im Bereich einer Gasturbine erst bei Auftreten eines Wellenbruches ermittelbar ist, womit hohe Reparaturkosten verursachende Schädigungen im Bereich einer Gasturbine über diese vorgeschlagene Einrichtung zur Notabschaltung einer Gasturbine nicht vermeidbar sind.

Der vorliegenden Erfindung liegt daher die Aufgabe zugrunde, eine Fluggasturbine mit einer ersten drehbaren Welle zur Verfügung zu stellen, deren Funktionsweise elektronisch überprüfbar ist und bei der eine Beeinträchtigung der Funktionsweise innerhalb kurzer Betriebszeiten auf bauraumgünstige Art und Weise bei gleichzeitig geringem Gesamtgewicht ermittelbar ist.

Erfindungsgemäß wird diese Aufgabe mit einer Fluggasturbine mit den Merkmalen des Patentanspruches 1 gelöst.

Bei der erfindungsgemäßen Fluggasturbine mit einer ersten drehbaren Welle, über die zwischen wenigstens zwei Einrichtungen Drehmoment austauschbar ist, und einer koaxial dazu angeordneten zweiten Welle, die zumindest in einem Wellenende nahen Bereich mit der ersten Welle drehfest verbunden ist, sind in zum Verbindungsbereich zwischen den Wellen beabstandeten Bereichen der Wellen Aussparungen vorgesehen, die bei Überschreiten einer in Abhängigkeit des im Bereich der ersten Welle anliegenden Drehmomentes stehenden definierten Verdrillung der ersten Welle gegenüber der zweiten Welle sich zumindest bereichsweise miteinander in Überdeckung befinden. Den Wellen ist im Bereich der Aussparungen wenigstens ein um einen wellenfesten Drehpunkt drehbar ausgeführtes Hebelelement zugeordnet, das im Bereich eines Endes eines Hebelarmes bei entsprechender Überdeckung der Aussparungen der Wellen in die Aussparungen der Wellen in radialer Richtung eingreift und dabei um den Drehpunkt verschwenkt, wobei sich dabei ein radialer Abstand zwischen einem Ende eines zweiten Hebelarmes des Hebelelementes und den Wellen vergrößert.

Erfindungsgemäß ist der zweite Hebelarm bei in die Aussparungen der Wellen eingreifendem erstem Hebelarm mit einer elektrischen Sensoreinrichtung zumindest zeitweise in Wirkverbindung bringbar. Zusätzlich ist im Bereich der Sensoreinrichtung durch Herstellen der Wirkverbindung ein zur definierten Verdrillung der ersten Welle äquivalentes Sensorsignal generierbar.

Die erfindungsgemäße Fluggasturbine ist im Vergleich zu dem aus dem Stand der Technik bekannten rein mechanischen Sicherheitssystem mit einer geringeren Bauteilanzahl ausgebildet und weist daher einen geringeren Bauraumbedarf auf und ist durch ein niedrigeres Bauteilgewicht gekennzeichnet. Zusätzlich ist eine Funktion des Sicherheitssystems der Fluggasturbine über die elektrische Sensoreinrichtung in gewünschtem Umfang elektronisch überprüfbar, was bei der bekannten, rein mechanischen Ausführung nicht möglich ist.

Im Vergleich zu der sowohl mechanische als auch elektronische Komponenten aufweisenden bekannten Einrichtung zur Notabschaltung einer Gasturbine sind Fehlerfälle bei der erfindungsgemäßen Fluggasturbine bereits vor Eintritt massiver Schäden im Bereich der Fluggasturbine mit gewünscht kurzen Auslösezeiten ermittelbar und Schädigungen im Bereich der Fluggasturbine bei Vorliegen unzulässiger Betriebszustände einer Fluggasturbine durch rechtzeitiges Einleiten entsprechender Gegenmaßnahmen in gewünschtem Umfang vermeidbar.

Bei bauraum- und kostengünstigen sowie mit geringem Aufwand betreibbaren Ausführungsformen der erfindungsgemäßen Fluggasturbine umfasst die Sensoreinrichtung wenigstens einen elektrischen Schalter oder einen elektrischen Sensor mit Verkabelung, der mit dem zweiten Hebelarm in Kontakt bringbar ist.

Ist der elektrische Sensor als ein Drahtsensor ausgebildet und weist der zweite Hebelarm einen mit einem Signaldraht in Wirkverbindung bringbaren Klingenbereich auf, mittels dem der Signaldraht durchtrennbar ist, ist das zur definierten Verdrillung der ersten Welle äquivalente Sensorsignal mit geringem konstruktivem Aufwand generierbar und gleichzeitig die elektronische Überprüfung der Funktionsweise des Sicherheitssystems der Fluggasturbine auf einfache Art und Weise realisiert.

Ist der elektrische Sensor als ein Kraftsensor ausgeführt, über den bei einem Kontakt zwischen dem Hebelarm und dem Kraftsensor das zur definierten Verdrillung der ersten Welle äquivalente Sensorsignal generierbar ist, sind Schädigungen im Bereich einer Fluggasturbine verursachende Betriebszustände mit geringem Aufwand aufgrund kurzer Auslösezeiten vermeidbar und zusätzlich die Funktionsweise eines solchen Sicherheitssystems einer Fluggasturbine in gewünschtem Umfang elektronisch überprüfbar.

Bei einer konstruktiv einfachen Ausführungsform der erfindungsgemäßen Fluggasturbine ist die Sensoreinrichtung mit einem Kraftstoffabschaltventil gekoppelt, mittels dem bei Vorliegen des zur definierten Verdrillung der ersten Welle äquivalenten Sensorsignals eine Kraftstoffversorgung unterbrechbar ist. Damit sind Überdrehzahlzustände rotierender Teile der Fluggasturbine bei Erkennen eines Fehlerfalles auf einfache Art und Weise vermeidbar, da ein Antrieb der Fluggasturbine innerhalb kurzer Betriebszeiten abschaltbar ist.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Es zeigt:
- Fig. 1: eine stark schematisierte Längsschnittansicht einer Fluggasturbine;
- Fig. 2: eine vergrößerte Ansicht eines in Fig. 1 näher gekennzeichneten Bereiches II der Fluggasturbine; und
- Fig. 3: eine vergrößerte Darstellung eines Bereiches III der Fluggasturbine aus einer in Fig. 2 näher gekennzeichneten Ansicht.

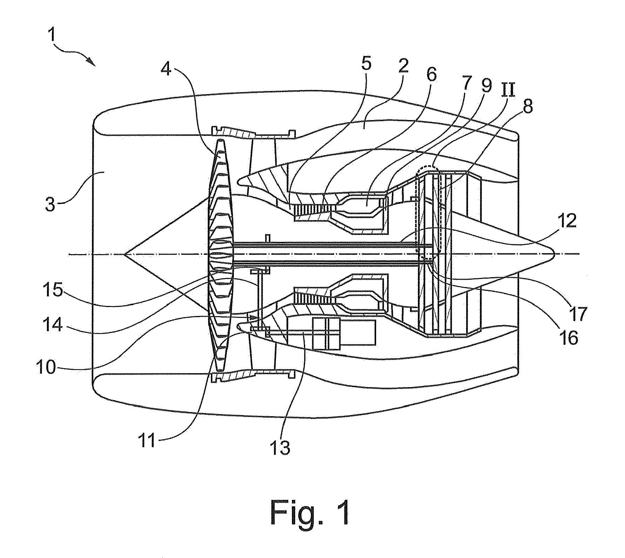

Fig. 1 zeigt eine Fluggasturbine 1 bzw. ein Strahltriebwerk eines Luftfahrzeugs, das einen Nebenstromkanal 2 und einen Einlaufbereich 3 aufweist. Stromab des Einlaufbereiches 3 schließt sich ein Bläser 4 in an sich bekannter Art und Weise an.

Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt. Der Triebwerkskern 5 ist mit einer Verdichtereinrichtung 6, einem Brenner 7, einer zum Antrieb des Bläsers 4 vorgesehenen Niederdruckturbine 8 und einer zum Antrieb der Verdichtereinrichtung 6 vorgesehenen Hochdruckturbine 9 ausgeführt. Zusätzlich ist in Fig. 1 eine schematisch dargestellte Hilfsgerätegetriebeeinrichtung 10 dargestellt, welche im Wesentlichen im Bereich eines Zwischengehäuses 11 des Strahltriebwerks 1 angeordnet ist und die in Abhängigkeit des jeweils vorliegenden Anwendungsfalles auch in einem anderen geeigneten Bereich des Strahltriebwerks 1 vorgesehen sein kann. Das Zwischengehäuse 11 befindet sich in radialer Richtung des Strahltriebwerks 1 in einem Bereich zwischen dem Triebwerkskern 5 und dem Nebenstromkanal 2.

Die Hilfsgerätegetriebeeinrichtung 10 wird von einer mit einer Triebwerkswelle 12 zusammenwirkenden Antriebswelle 13 angetrieben, die im Wesentlichen parallel zu der Triebwerkswelle 12 angeordnet ist und mit der Triebwerkswelle 12 vorliegend über eine Hilfswelle 14 in Wirkverbindung bringbar ist. Die Hilfswelle 14 ist über eine Kegelradverzahnung 15 an die Triebwerkswelle 12 angebunden, wobei sie mit einer Hochdruckwelle zusammenwirkt, welche im Betrieb des Strahltriebwerks 1 mit höherer Drehzahl als eine koaxial dazu angeordnete und an den Bläser 4 angebundene Niederdruckwelle 16 rotiert. Der Bläser 4 ist über die Niederdruckwelle 16 drehfest mit der Niederdruckturbine 8 verbunden, womit über die Niederdruckwelle 16 zwischen dem Bläser 4 und der Niederdruckturbine 8 Drehmoment führbar ist. Koaxial zur Niederdruckwelle 16 ist eine weitere zweite Welle 17 innerhalb der Niederdruckwelle 16 vorgesehen, die im Bereich des Bläsers 4 drehfest mit der Niederdruckwelle 16 verbunden ist.

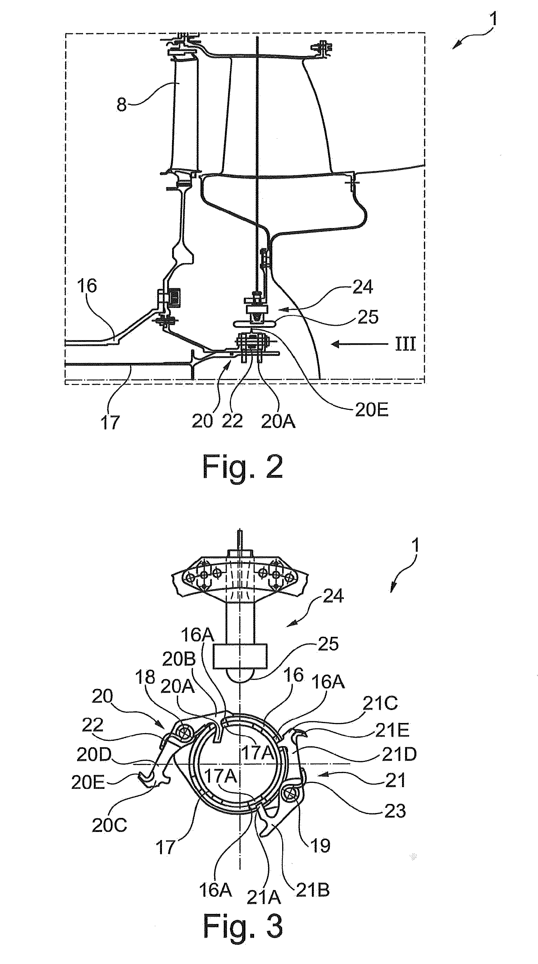

Fig. 2 zeigt eine vergrößerte Darstellung eines in Fig. 1 näher gekennzeichneten Bereiches II, der die Niederdruckturbine 8 und ein dem Bläser 4 abgewandtes Ende der Niederdruckwelle 16 und der weiteren Welle 17 umfasst. Zusätzlich ist in Fig. 3 ein die Enden der Niederdruckwelle 16 und der weiteren Welle 17 umfassender und in Fig. 2 näher gekennzeichneter Bereich III dargestellt.

Aus den Darstellungen gemäß Fig. 2 und Fig. 3 geht hervor, dass in zum Verbindungsbereich zwischen der Niederdruckwelle 16 und der weiteren Welle 17 beabstandeten Bereichen der Niederdruckwelle 16 und der weiteren Welle 17 bzw. im Bereich von deren Wellenenden Aussparungen 16A, 17A vorgesehen sind, die bei Überschreiten einer in Abhängigkeit des im Bereich der Niederdruckwelle 16 anliegenden Drehmomentes stehenden definierten Verdrillung der Niederdruckwelle 16 gegenüber der weiteren Welle 17 sich zumindest bereichsweise miteinander in Überdeckung befinden. Der Niederdruckwelle 16 und der weiteren Welle 17 sind im Bereich der Aussparungen 16A und 17A vorliegend zwei jeweils um einen wellenfesten Drehpunkt 18, 19 drehbar ausgeführte Hebelelemente 20, 21 zugeordnet, die jeweils im Bereich eines Endes 20A bzw. 21 A eines Hebelarmes 20B, 21 B bei entsprechender Überdeckung der Aussparungen 16A, 17A der Niederdruckwelle 16 und der weiteren Welle 17 in die Aussparungen 16A und 17A der Niederdruckwelle 16 und der weiteren Welle 17 in radialer Richtung eingreifen und dabei um die Drehpunkte 18 und 19 verschwenken.

Während der Verschwenkung der Hebelelemente 20 und 21 um die Drehpunkte 18 und 19 vergrößert sich ein radialer Abstand zwischen einem Ende 20C bzw. 21C eines zweiten Hebelarmes 20D bzw. 21 D. Die vorbeschriebene Drehbewegung der Hebelelemente 20 und 21 wird vorliegend über Federelemente 22 und 23 sowie durch an den Hebelelementen 20 und 21 im Betrieb angreifende Zentrifugalkräfte ausgelöst, wenn die Drehbewegung durch die vorbeschriebene Überdeckung der Aussparungen 16A und 17A freigegeben ist.

In Fig. 3 ist das Hebelelement 21 in einem Betriebszustand gezeigt, zu dem das Ende 21 A des Hebelarmes 21 B lediglich in die Aussparung 16A der Niederdruckwelle 16 eingreift, da die drehmomentabhängige Verdrillung der Niederdruckwelle 16 in Bezug auf die weitere Welle 17 kleiner als die definierte Verdrillung ist, zu der sich wiederum die Aussparungen 16A und 17B in einem für ein Durchgreifen des Endes 21 A des Hebelelementes 21 sowohl durch die Aussparungen 16A als auch durch die Aussparungen 17A erforderlichen Überdeckungsbetriebszustand befinden. Im Gegensatz dazu ist das Hebelelement 20 aufgrund des Durchgriffes des Endes 20A durch beide Aussparungen 16A und 17A der Wellen 16 und 17 um den Drehpunkt 18 verschwenkt und das zweite Ende 20C des Hebelelementes 20 ist in radialer Richtung weiter von der Oberfläche der Niederdruckwelle 16 beabstandet als das zweite Ende 21C des Hebelelementes 21.

Die zweiten Hebelarme 20D und 21D der Hebelelemente 20 und 21 sind bei in die Aussparungen 16A und 17A der Niederdruckwelle 16 und der weiteren Welle 17 eingreifenden ersten Hebelarmen 20B und 21 B mit einer elektrischen Sensoreinrichtung 24 zumindest zeitweise in Wirkverbindung bringbar, wobei im Bereich der Sensoreinrichtung 24 durch Herstellen der Wirkverbindung ein zur definierten Verdrillung der Niederdruckwelle 16 äquivalentes Sensorsignal generierbar ist.

Die Sensoreinrichtung 24 ist vorliegend als ein sogenannter Drahtsensor ausgebildet, der einen Signaldraht 25 aufweist. Aufgrund der Rotation der Niederdruckwelle 16 und der weiteren Welle 17 durchtrennt das Hebelelement 20 oder 21 den Signaldraht 25 mit einem Klingenbereich 20E bzw. 21 E, das zuerst den Signaldraht 25 mit seinem ausgeschwenkten Ende 20C zw. 21C des zweiten Hebelarmes 20D bzw. 21D erreicht. Dadurch ist über die Sensoreinrichtung 24 ein Signal auslösbar, mittels dem ein Kraftstoffabschaltventil der Fluggasturbine 1 betätigt wird und eine Kraftstoffzufuhr der Fluggasturbine unterbrochen wird.

In Abhängigkeit des jeweils vorliegenden Anwendungsfalles besteht auch die Möglichkeit, mehrere Sensoreinrichtungen 24 über den Umfang der Niederdruckturbine 16 verteilt anzuordnen, um einen Fehlerfall der Fluggasturbine 1 bei Verlust einer der Sensoreinrichtungen 24, beispielsweise durch einen anderen Fehlerfall, nach wie vor ermitteln zu können.

Die erfindungsgemäße Fluggasturbine vereint die Vorteile rein mechanischer und rein elektronischer Sicherheitssysteme zum Ermitteln von Fehlerfällen und zum Auslösen von Gegenmaßnahmen, mittels welchen unerwünschte Schädigungen von Flugzeugtriebwerken, beispielsweise verursacht durch Überdrehzahlzustände von rotierenden Teilen, wie Turbinenrotoren und dergleichen, auf einfache Art und Weise innerhalb kurzer Betriebszeiten vermieden werden können. Hierfür wird zur Bestimmung des Verdrehwinkels bzw. einer Verdrillung einer Drehmoment führenden Welle einer Fluggasturbine bzw. einer Referenzwinkelposition der Rotoren ein herkömmliches Referenzwinkelrohr in Verbindung mit einer vorzugsweise als elektrischer Schalter oder Sensor mit zugehöriger Verkabelung ausgeführten Sensoreinrichtung verwendet. Bei Überschreiten des Verdrehwinkels der Drehmoment führenden Welle im Bereich eines Endstücks eines Referenzrohres bzw. der weiteren Welle werden Aussparungen bzw. Schlitze der Drehmoment führenden Welle und des Referenzrohres überlagert, sodass ein oder mehrere Hebel in der vorbeschriebenen Art und Weise einrasten können. Ein gegenüberliegendes Hebelarmende eines Hebelelementes bzw. eines Kipphebels wird durch angreifende Zentrifugalkräfte radial nach außen bewegt und zertrennt vorzugsweise mittels einer Klinge einen Signaldraht. Durch das Durchtrennen des Signaldrahtes ist ein Signal auslösbar, das zur Betätigung eines Kraftstoffabschaltventiles verwendet werden kann.

### Bezugszeichenliste

- 1: Fluggasturbine, Strahltriebwerk
- 2: Nebenstromkanal
- 3: Einlaufbereich
- 4: Bläser
- 5: Triebwerkskern
- 6: Verdichtereinrichtung
- 7: Brenner
- 8: Niederdruckturbine
- 9: Hochdruckturbine
- 10: Hilfsgerätegetriebeeinrichtung
- 11: Zwischengehäuse
- 12: Triebwerkswelle
- 13: Antriebswelle
- 14: Hilfswelle
- 15: Kegelradverzahnung
- 16: Niederdruckwelle
- 16A: Aussparung der Niederdruckwelle
- 17: weitere Welle
- 17A: Aussparung der weiteren Welle
- 18, 19: wellenfester Drehpunkt
- 20: Hebelelement
- 20A: Ende des ersten Hebelarmes
- 20B: erster Hebelarm
- 20C: Ende des zweiten Hebelarmes
- 20D: zweiter Hebelarm
- 20E: Klingenbereich des zweiten Hebelarmes
- 21: Hebelelement
- 21A: Ende des ersten Hebelarmes
- 21B: erster Hebelarm
- 21C: Ende des zweiten Hebelarmes
- 21D: zweiter Hebelarm
- 21E: Klingenbereich des zweiten Hebelarmes
- 22, 23: Federeinrichtung
- 24: Sensoreinrichtung
- 25: Signaldraht

## Patentansprüche

1. Fluggasturbine (1) mit einer ersten drehbaren Welle (16), über die zwischen wenigstens zwei Einrichtungen (4, 8) Drehmoment austauschbar ist, und einer koaxial dazu angeordneten zweiten Welle (17), die zumindest in einem Wellenende nahen Bereich mit der ersten Welle (16) drehfest verbunden ist, wobei in zum Verbindungsbereich zwischen den Wellen (16, 17) beabstandeten Bereichen der Wellen Aussparungen (16A, 17A) vorgesehen sind, die bei Überschreiten einer in Abhängigkeit des im Bereich der ersten Welle (16) anliegenden Drehmomentes stehenden definierten Verdrillung der ersten Welle (16) gegenüber der zweiten Welle (17) sich zumindest bereichsweise miteinander in Überdeckung befinden, wobei den Wellen (16, 17) im Bereich der Aussparungen (16A, 17A) wenigstens ein um einen wellenfesten Drehpunkt (18, 19) drehbar ausgeführtes Hebelelement (20, 21) zugeordnet ist, das im Bereich eines Endes (20A, 21 A) eines Hebelarmes (20B, 21 B) bei entsprechender Überdeckung der Aussparungen (16A, 17A) der Wellen (16, 17) in die Aussparungen (16A, 17A) der Wellen (16, 17) in radialer Richtung eingreift und dabei um den Drehpunkt (18, 19) verschwenkt, und wobei ein radialer Abstand zwischen einem Ende (20C, 21 C) eines zweiten Hebelarmes (20D, 21D) des Hebelelementes (20, 21) und den Wellen (16, 17) sich dabei vergrößert, **dadurch gekennzeichnet, dass** der zweite Hebelarm (20D, 21D) bei in die Aussparungen (16A, 17A) der Wellen (16, 17) eingreifendem erstem Hebelarm (20B, 21 B) mit einer elektrischen Sensoreinrichtung (24) zumindest zeitweise in Wirkverbindung bringbar ist und im Bereich der Sensoreinrichtung (24) durch Herstellen der Wirkverbindung ein zur definierten Verdrillung der ersten Welle (16) äquivalentes Sensorsignal generierbar ist.

2. Fluggasturbine nach Anspruch 1, **dadurch gekennzeichnet, dass** die Sensoreinrichtung (24) wenigstens einen elektrischen Schalter oder einen elektrischen Sensor mit Verkabelung umfasst, der mit dem zweiten Hebelarm (20D, 21D) in Kontakt bringbar ist.

3. Fluggasturbine nach Anspruch 2, **dadurch gekennzeichnet, dass** der elektrische Sensor (24) als ein Drahtsensor ausgebildet ist und der zweite Hebelarm (20D, 21D) einen mit einem Signaldraht (25) in Wirkverbindung bringbaren Klingenbereich (20E, 21 E) aufweist, mittels dem der Signaldraht (25) durchtrennbar ist.

4. Fluggasturbine nach Anspruch 1 oder 2, **dadurch gekennzeichnet, dass** der elektrische Sensor als ein Kraftsensor ausgeführt ist, über den bei einem Kontakt zwischen dem zweiten Hebelarm und dem Kraftsensor das Sensorsignal generierbar ist.

5. Fluggasturbine nach einem der Ansprüche 1 bis 4, **dadurch gekennzeichnet, dass** die Sensoreinrichtung (24) mit einem Kraftstoffabschaltventil gekoppelt ist, mittels dem bei Vorliegen des zur definierten Verdrillung der ersten Welle äquivalenten Sensorsignals eine Kraftstoffversorgung unterbrechbar ist.
